(19) Europäisches Patentamt
European Patent Office
Office européen des brevets

(11) **EP 4 640 360 A1**

(12) **EUROPEAN PATENT APPLICATION**

(43) Date of publication:
**29.10.2025 Bulletin 2025/44**

(21) Application number: **25171792.2**

(22) Date of filing: **22.04.2025**

(51) International Patent Classification (IPC):
*B23K 26/00* (2014.01)   *C22C 21/02* (2006.01)
*H01M 50/209* (2021.01)   *H01M 50/211* (2021.01)
*H01M 50/224* (2021.01)   *B23K 26/24* (2014.01)
*H01M 50/233* (2021.01)   *H01M 50/244* (2021.01)

(52) Cooperative Patent Classification (CPC):
**H01M 50/224; B23K 26/00; B23K 26/24;
H01M 50/233; H01M 50/244;** C22C 21/02;
C22C 21/06; C22C 21/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024 KR 20240053301**

(71) Applicant: **SK On Co., Ltd.
Seoul 03161 (KR)**

(72) Inventors:
• **CHEONG, Hoe Min
Daejeon 34124 (KR)**
• **KIM, Jae Hun
Daejeon 34124 (KR)**
• **KIM, Hyeong Won
Daejeon 34124 (KR)**
• **YOON, Sung Chel
Daejeon 34124 (KR)**
• **LEE, Ki Dong
Daejeon 34124 (KR)**

(74) Representative: **Prüfer & Partner mbB
Patentanwälte · Rechtsanwälte
Sohnckestraße 12
81479 München (DE)**

(54) **BATTERY MODULE**

(57)    A battery module according to the present disclosure includes a housing that has an internal accommodating space; and a plurality of battery cells that are located in the internal accommodating space, in which the housing includes a welded joint in which a first base material of a first alloy and a second base material of a second alloy are welded, the welded joint includes a defect area in which the first base material and the second base material are welded and joined and a repair area located on the defect area, the repair area has a lower silicon concentration than the defect area, and the repair area satisfies the following Expression 1 or 2.

[Expression 1]

$$0 \le h_1 \le 0.15t$$

[Expression 2]

$$0 \le h_2 \le 0.2 \text{ mm} + 0.3t$$

FIG. 1

**Description**

**TECHNICAL FIELD**

Embodiments of the present disclosure relate generally to a battery module, and more particularly, to a battery module including a housing having an internal accommodating space and a plurality of battery cells located in the internal accommodating space.

**BACKGROUND**

**A** battery module housing has a structure in which housing members that may be assembled and joined to form a sealed internal accommodating space are joined to each other by welding, in which pouch-type or prismatic battery cells connected in series/parallel to each other are located in the internal accommodating space.

However, when an external impact is applied to the housing, a connected portion (welded portion) between the housing members does not have a high resistance to the external impact, so there is a risk that the connected portion is easily damaged, or the sealing property is reduced, and harmful substances that may be generated from a battery cell leak out. In addition, there is a risk of fatigue failure due to repeated loads caused by the charging/discharging cycles and/or vibration.

The main factor that reduces the mechanical properties of the welded portion is surface defects such as holes, craters, and burrs formed during the welding process.

In the past, to suppress the adverse effects of such surface defects, the welded portion was re-melted to lower the degree of surface defects.

According to the battery module of an embodiment of the present disclosure, it is possible to suppress the crack generation and propagation at the welded joints by including the welded joints with high welding quality. Accordingly, it is possible to improve the long-term reliability and safety of the battery.

**SUMMARY**

**An** embodiment of the present disclosure is directed to providing a battery module with improved long-term reliability and safety of a battery by suppressing the occurrence and propagation of cracks in a welded joint.

A battery module of the present disclosure may be widely applied in green technology fields such as electric vehicles, battery charging stations, solar power generation using batteries, and wind power generation etc. In addition, a battery module of the present disclosure may be used in eco-friendly electric vehicles, hybrid vehicles, etc., to prevent climate change by suppressing air pollution and greenhouse gas emissions.

In one embodiment of the present disclosure, a battery module includes a housing that has an internal accommodating space; and a plurality of battery cells that are located in the internal accommodating space, in which the housing includes a welded joint in which a first base material of a first alloy and a second base material of a second alloy are welded, the welded joint includes a defect area in which the first base material and the second base material are welded and joined and a repair area located on the defect area, the repair area has a lower silicon concentration than the defect area, and the repair area satisfies the following Expression 1 or 2:

$$[\text{Expression 1}]$$

$$0 \leq h_1 \leq 0.15t$$

$$[\text{Expression 2}]$$

$$0 \leq h_2 \leq 0.2 \text{ mm} + 0.3t$$

In the above Expressions 1 and 2, $h_1$ may denote a shortest distance (mm) between a straight line connecting an outer surface of the first base material and a boundary of the welded joint and an outer surface of the second base material and the boundary of the welded joint in a welded cross-section and a lowest point on a surface of the repair area located inside the straight line on the welded cross-section, $h_2$ may denote a shortest distance (mm) between the straight line and a highest point on the surface of the repair area located outside the straight line on the welded cross-section, and t may denote a thinner thickness (mm) of thicknesses of the first base material and the second base material.

The silicon concentration of the repair area may be 2 wt% or less.

A difference in the silicon concentration between the repair area and the defect area may be 3 to 15 wt%.

The silicon concentration of the repair area and the defect area may be measured by scanning electron microscope (SEM)-energy dispersive X-ray spectroscopy (EDS) (SEM-EDS).

The defect area may satisfy the following Expression 3:

$$[\text{Expression 3}]$$

$$h_3 > 0.15t$$

In the above Expression 3, $h_3$ may denote a shortest distance (mm) between the straight line connecting the outer surface of the first base material and the boundary of the welded joint and the outer surface of the second base material and the boundary of the welded joint in the welded cross-section and the lowest point on the surface of the defect area located inside the straight line in the welded cross-section, and t may denote the thinner thickness (mm) of thicknesses of the first base material and the second base material.

The repair area may be repair-welded using a filler of a third alloy.

A melting point of the third alloy may be higher than a lower melting point of the melting points of the first alloy and the second alloy.

The first alloy to the third alloy may each be an aluminum-based alloy.

At least one of the first alloy and the second alloy may be an aluminum-based alloy containing 8 wt% or more of silicon.

The third alloy may have a higher aluminum content than the first alloy and the second alloy.

The welded joint may be a butt joint, a corner joint, a flange-type butt joint, or a tee joint (T joint).

The first base material and the second base material may each be in the shape of a square plate or a bent square plate having one end portion or both end portions vertically bent.

The housing may include a first housing member in a bent square plate shape that forms a bottom surface and two side surfaces on left and right integrally connected to the bottom surface; a second housing member in a square plate shape that is joined to the first housing member to form an upper surface facing the bottom surface; and a third housing member and a fourth housing member in the square plate shape that are joined to the first housing member and the second housing member to form two side surfaces on front and back.

The first base material connected to each other by the welded joint may be one selected from the first to fourth housing members. The second base material may be another one of the first to furth housing members that is different from the first base material.

In another embodiment of the present disclosure, a method for manufacturing a battery module includes a) aligning a first base material and a second base material, which are welding targets and housing members that are joined to each other to form an internal accumulating space in which a plurality of battery cells are accommodated; and b) irradiating a laser to a contact surface between the first base material and the second base material to form a welded joint that includes a defect area and a repair area that covers the defect area, satisfies the following Expression 1 or 2, and has a lower silicon concentration than a defect area.

$$[\text{Expression 1}]$$

$$0 \le h_1 \le 0.15t$$

$$[\text{Expression 2}]$$

$$0 \le h_2 \le 0.2 \text{ mm} + 0.3t$$

In the above Expressions 1 and 2, $h_1$ may denote a shortest distance (mm) between a straight line connecting an outer surface of the first base material and a boundary of the welded joint and an outer surface of the second base material and the boundary of the welded joint in a welded cross-section and a lowest point on a surface of the repair area located inside the straight line on the welded cross-section, $h_2$ may denote a shortest distance (mm) between the straight line and a highest point on the surface of the repair area located outside the straight line on the welded cross-section, and t may denote a thinner thickness (mm) of thicknesses of the first base material and the second base material.

In operation a), the alignment between the first base material and the second base material may be an alignment for a butt joint, an alignment for a corner joint, an alignment for a flange-type butt joint, or an alignment for a tee joint.

The method may further include inserting a plurality of battery cells into a space corresponding to an internal accommodating space before welding, before operation a), or after operation a) and before operation b).

The silicon concentration of the repair area may be 2 wt% or less.

A difference in the silicon concentration between the repair area and the defect area may be 3 to 15 wt%.

These and other features and advantages of the embodiments of the present disclosure will become apparent to those skilled in the art of the invention from the following detailed description in conjunction with the following drawings.

## BRIEF DESCRIPTION OF THE DRAWINGS

FIG. 1 is a cross-sectional view illustrating a welded cross-section in a battery module according to an embodiment of the present disclosure.

FIG. 2 is another cross-sectional view illustrating a welded cross-section in a battery module according to an embodiment of the present disclosure.

FIG. 3 is another cross-sectional view illustrating a welded cross-section in a battery module according to an embodiment of the present disclosure.

FIG. 4 is another cross-sectional view illustrating a welded cross-section in a battery module according to an embodiment of the present disclosure.

FIG. 5 is an exploded perspective view of housing members joined by welding to form a housing in a battery module according to an embodiment of the present disclosure.

FIG. 6 is a cross-sectional view illustrating a cross-section of a battery module including a housing and a plurality of battery cells accommodated in an internal accommodating space of the housing according to an embodiment of the present disclosure.

FIG. 7 is a diagram illustrating a process diagram of a method for manufacturing a battery module according to an embodiment of the present disclosure.

FIG. 8 is a diagram illustrating a welded defect portion in a battery module according to an embodiment of the present disclosure.

FIG. 9 is a diagram illustrating a repair weld portion in the battery module according to an embodiment of the present disclosure.

FIG. 10 is a diagram illustrating an appearance of a welding defect in the battery module according to an embodiment of the present disclosure

Numerals for Main Elements

100: First base material, 200: Second base material, 300: Welded joint, 310: Defect area, 320: Repair area, 10: First housing member, 20: Third housing member, 30: Fourth housing member, 40: Second housing member, 1000: Housing, 2000: Battery cell

## DETAILED DESCRIPTION

The embodiments of the present disclosure described herein may be modified in many different forms, and the disclosed technology is not limited to the embodiments described below. Rather, the embodiments are provided so that this disclosure will be thorough and complete, and will fully convey the invention to those skilled in the art.

Also, the singular forms used in the specification and appended claims are intended to include the plural forms as well, unless the context specifically dictates otherwise.

In addition, numerical ranges as used herein include lower and upper limits and all values within these ranges, increments logically derived from forms and widths of defined ranges, all values doubly defined, and all possible combinations of upper and lower limits of numerical ranges defined in different forms. Unless specifically defined otherwise herein, values outside the numerical ranges that may occur due to experimental errors or round-off values are also included in the defined numerical ranges.

Furthermore, throughout the present specification, unless explicitly described to the contrary, "including" any components will be understood to imply the inclusion of other elements rather than the exclusion of any other elements.

In the present specification, when an element such as a layer, a film, a region, or a plate is referred to as being "above" or "on" another element, it may be directly on another element or may be on another element with the other element interposed therebetween.

Terms 'first', 'second', and the like used herein may be used to describe various components, but the components are not to be construed as being limited by these terms. These terms are used only to distinguish one component from another component.

Surface defects such as holes or craters formed during a welding process of housing members are known to reduce mechanical properties of a welded portion. When such surface defects exist in the welded portion, the housing member may be damaged by pressure (internal pressure) caused by gas generated inside a battery module or by external impact. In addition, a battery module formed with surface defects may be at risk of leaking harmful substances that may be generated from the battery cell. Furthermore, the possibility of explosion and ignition due to the infiltration of foreign substances from the outside increases.

To solve the above issues, a method of re-melting a welded portion with surface defects is being used, but the method is not a sufficient solution because it only reduces the degree of surface defects. Furthermore, the welded portion supplemented in this way has a problem in that fine cracks exist, which grows into larger cracks or propagate to the surroundings under repeated stress and deformation.

Therefore, from the perspective of long-term reliability and safety of the battery, there is a need to improve the mechanical properties by suppressing the occurrence and propagation of cracks in the welded portion where the surface defects are repaired.

Therefore, the above problem may be solved by providing a battery module including a housing that has an internal accommodating space; and a plurality of battery cells that are located in the internal accommodating space, in which the housing includes a welded joint in which a first base material of a first alloy and a second base material of a second alloy are welded, the welded joint includes a defect area in which the first base material and the second base material are welded and joined, and a repair area located on the defect area, the repair area has a lower silicon concentration than the defect area, and the repair area satisfies the following Expression 1 or 2.

$$[\text{Expression 1}]$$

$$0 \leq h_1 \leq 0.15t$$

$$[\text{Expression 2}]$$

$$0 \leq h_2 \leq 0.2 \text{ mm} + 0.3t$$

The above Expressions 1 and 2 are the criteria for defects in the international standard (ISO 13919-1) related to laser welding of non-ferrous metal aluminum. In order to satisfy this, an area and volume of a portion (empty portion, void) requiring repair welding should be measured using a sensor (such as a 3D shape measuring instrument) provided in repair welding equipment and then repair welding should be performed while supplying an appropriate amount of filler.

In the above Expressions 1 and 2, $h_1$ denotes a shortest distance (mm) between a straight line connecting an outer surface of the first base material and a boundary of the welded joint and an outer surface of the second base material and the boundary of the welded joint in a welded cross-section and a lowest point on a surface of the repair area located inside the straight line on the welded cross-section, $h_2$ denotes a shortest distance (mm) between the straight line and a highest point on the surface of the repair area located outside the straight line on the welded cross-section, and t denotes a thinner thickness (mm) of thicknesses of the first base material and the second base material. In this case, the boundary between the outer surface of the first base material (or second base material) and the welded joint means an area between the defect area and the repair area of the welded joint in the welded cross-section and a point where an outer surface touches.

The welded cross-section means a cross-section that crosses the welded joint from the first base material side to the second base material side, and may mean a cross-section that crosses so that the area of the welded joint is minimized. In addition, the outer surface of the first base material and the outer surface of the second base material are surfaces that form the outer surface of the housing, and the outer surface of the housing means a surface exposed to the outside of the housing, and the inner surface of the housing may mean a surface that is an opposite surface of the outer surface and divides the internal accommodating space of the housing. Accordingly, the outer side may mean the outside of the housing, and the inner side may mean the inside (the internal accommodating space side) of the housing.

The defect area refers to an area where a weld bead formed by surface defects such as the holes or craters is empty and a peripheral portion thereof, and the repair area may refer to an area formed on the defect area to repair defects in the empty area. That is, the repair area may cover all or part of the surface of the defect area.

In a battery module according to an embodiment, the surface defects such as the holes or craters may be not only healed by the repair area that satisfies Expression 1 or 2 and has a lower silicon concentration than the defect area, but the occurrence and propagation of microscopic cracks may also be effectively suppressed. Accordingly, the problems of physical damage or reduced safety due to internal pressure and external force applied to the battery module may be solved.

The surface of the repair area may include at least one area selected from a first area located inside a straight line, a second area located outside the straight line, and a third area located on the straight line. The fact that the repair area satisfies Expression 1 or 2 may refer to that each area included in the repair area satisfies Expression 1 or 2. That is, the first area of the surface of the repair area satisfies Expression 1, the second area satisfies Expression 2, and the third area may satisfy both Expressions 1 and 2, with $h_1$ and $h_2$ in Expressions 1 and 2 both being 0.

In an embodiment, $h_1$ in Expression 1 may be 0 to 0.15t, 0 to 0.1t, or 0 to 0.05t, and $h_2$ in Expression 2 may be 0 to 0.2 mm + 0.3t, 0 to 0.2 mm + 0.2t, or 0 to 0.2 mm + 0.15t.

In Expressions 1 and 2, $h_1$, $h_2$, and it may be measured through image analysis using an optical microscope (OM). Specifically, after undergoing specimen pretreatment processes such as, for example, welding specimen cutting, mounting, specimen surface polishing, and etching, the image may be acquired by observing the image with the optical microscope and the defects may be derived based on the acquired image. In the welded cross-section, the defect area and the repair area having different silicon concentrations may be visually distinguished by etching. In a specific example, the etching may be performed in a 1 to 10 wt% of basic solution for 0.1 to 3 minutes.

In an embodiment, the silicon concentration of the repair area may be 2 wt% or less, 1.5 wt% or less, 0 wt% or more, 0.01 wt% or more, 0.1 wt% or more, or a value between the values, such as 0 to 2 wt%, 0.01 to 2 wt%, or 0.1 to 1.5 wt%.

In an embodiment, the difference in the silicon concentration between the repair area and the defect area may be 15 wt% or less, 8 wt% or less, 6 wt% or less, 3 wt% or more, 4 wt% or more, or a value between these values such as, for example, 3 to 15 wt%, 3 to 8 wt%, or 4 to 6 wt%.

In an embodiment, the silicon concentration of the repair area and the defect area may be measured by scanning electron microscope (SEM)-energy dispersive X-ray spectroscopy (EDS) (SEM-EDS). The energy dispersive X-ray spectroscopy (EDS) is equipment that uses a detector attached to the scanning electron microscope (SEM), and the composition analysis of the entire weld may be quantified by detecting characteristic X-rays among various signals emitted by the interaction of a sample surface and an electron beam. Specifically, the average silicon concentration of the repair area and the average silicon concentration of the defect area in the welded cross-section may each be measured through the SEM-EDS (SEM: Scanning Electron Microscope, EDS: Energy Dispersive X-ray Spectroscopy) analysis.

In an embodiment, the defect area is the area where the weld bead formed by the surface defects such as the holes or craters are empty and a peripheral portion thereof, and may satisfy the following Expression 3.

$$[\text{Expression 3}]$$

$$h_3 > 0.15t$$

In the above Expression 3, $h_3$ denotes a shortest distance (mm) between the straight line connecting the outer surface of the first base material and the boundary of the welded joint and the outer surface of the second base material and the boundary of the welded joint in the welded cross-section and the lowest point on the surface of the defect area located inside the straight line in the welded cross-section, and t denotes the thinner thickness (mm) of thicknesses of the first base material and the second base material.

In an embodiment, $h_3$ of the Expression 3 may be greater than 0.15t and less than or equal to t, and may be 0.2t to t or 0.5t to t. The $h_3$ and t of the Expression 3 may be measured in the same manner as the method of measuring $h_1$, $h_2$, and t of the Expressions 1 and 2.

In an embodiment, the repair area may be repair-welded using a filler of a third alloy. That is, the repair area may be formed by irradiating a laser while supplying the filler of the third alloy. In this case, the repair welding method is not particularly limited as long as a repair area is formed that satisfies Expression 1 or 2 and has a lower silicon concentration than the defect area. For example, the repair welding method may include measuring a width, a height, etc., of a welded joint through a vision inspector; selecting the welded joint (or deflective welded joint) having the defect area based on the measured values; and irradiating a laser while supplying the filler of the third alloy to the defect area.

In an embodiment, a melting point of the third alloy may be higher than the lower melting point of melting points of the first alloy and the second alloy. Specifically, the melting point of the third alloy may be higher than the lower melting point of the first alloy and the second alloy and lower than the higher melting point of the first alloy and the second alloy. When the melting point of the third alloy satisfies the above-described range, the concentration of impurities that cause the occurrence and propagation of cracks may be reduced, thereby more effectively preventing the occurrence and propagation of cracks. When the third alloy is an aluminum-based alloy as described below, it may have a melting point of 600 to 750°C, 620 to 720°C, or 650 to 700°C.

In an embodiment, the housing may be the aluminum-based material. That is, the first alloy of the first base material, the second alloy of the second base material, and the third alloy for forming the repair area may each be the aluminum-based alloy. The first alloy and the second alloy may be, independently of each other, a solid-solution hardening aluminum alloy or a precipitation hardening aluminum alloy. Examples of aluminum alloys suitable for the housing may include an Al-Mg-based aluminum alloy, an Al-Mg-Si-based aluminum alloy, an Al-Si-based aluminum alloy, or an Al-Si-Cu-based aluminum alloy. Examples of aluminum alloys suitable for practical housing include aluminum alloys for die casting (ALDC) such as Al5000 series aluminum alloys, Al6000 series aluminum alloys, and ALDC 1, 3, and 12, but aluminum alloys are not necessarily limited to these materials.

At least one of the first alloy and the second alloy is an aluminum-based alloy containing 8 wt% or more of silicon. When an aluminum alloy with a high silicon content is used as an alloy, there is a greater possibility that the surface defects such as the holes or craters will occur and that the surface defects will be formed larger and wider than in other cases. Even if the welded joint with many surface defects is repaired by re-melting, there is a high possibility that fine cracks will exist and cracks will grow or propagate to the surroundings due to pressure inside the battery module or external impact. However, according to an embodiment, since the battery module has the repair area as described above on the defect area, the growth and propagation of cracks in the welded joint may be suppressed, thereby providing excellent long-term reliability and safety. Examples of aluminum alloys containing 8 wt% or more of silicon suitable for the housing include Al-Mg-Si aluminum alloys, Al-Si aluminum alloys, Al-Si-Cu aluminum alloys, etc. Examples of aluminum alloys containing 8 wt% or more of silicon suitable for the practical housing include aluminum alloys for the die casting (ALDC) such as ALDC 1, 12, etc. As practical examples, at least one of the first alloy and the second alloy may contain 8 wt% or more, 9 wt% or more, 10 wt% or more, 15 wt% or less, or 12 wt% or less of silicon, and more practically may contain 8 to 15 wt%, 9 to 15 wt%, 10 to 15 wt%, 9 to 12 wt%, or 10 to 12 wt% of silicon.

In an embodiment, when each of the first to third alloys are the aluminum-based alloy, the third alloy may have the higher aluminum content than the first alloy and the second alloy. Accordingly, the third alloy may have a lower silicon content than the first and second alloys, so that the silicon concentration in the repair area may be lower than the silicon concentration in the defect area. For example, the third alloy may have an aluminum content of 95 to 100 wt%, 95 to 99.9 wt%, 98 to 99.9 wt%, or 99 to 99.9 wt%, and may have a silicon content of 0 to 1 wt%, 0.01 to 1 wt%, 0.01 to 0.5 wt%, or 0.01 to 0.3 wt%, and may include other metals forming the alloys as the remainder. As an example of the practical third alloy, the Al1000 series aluminum alloy may be described, but may be replaced with another component without departing from the scope of the present disclosure.

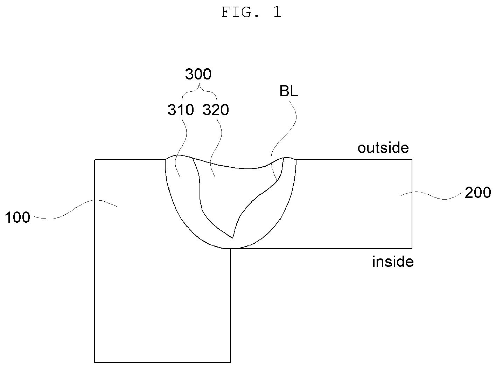

Hereinafter, the embodiments of the present disclosure will be described in detail with reference to the attached drawings. However, this is merely illustrative, and the present disclosure is not limited to the specific embodiments described by way of example. FIG. 1 is a cross-sectional view illustrating a welded cross-section in a battery module according to an embodiment of the present disclosure, in which the inner side is depicted as inside and the outer side as outside. In FIG. 1, a first base material 100 and a second base material 200 of the housing member forming the internal accommodating space in which a plurality of battery cells may be accommodated may be welded by a welded joint 300. The welded joint 300 may include a defect area 310 in which the first base material 100 and the second base material 200 are melted and joined, and a repair area 320 covering part or all of the surface of the defect area 310.

As illustrated in FIG. 1, the defect area 310 and the repair area 320 have a boundary between the areas due to the difference in the silicon concentration, and the boundary may be observed as a boundary line BL when observing the welded cross-section experimentally using an optical microscope. In the welded cross-section, the boundary line BL between the defect area 310 and the repair area 320 may be observed more clearly by etching, and for example, the etching may be performed in a 1 to 10 wt% of alkaline solution for 0.1 to 3 minutes.

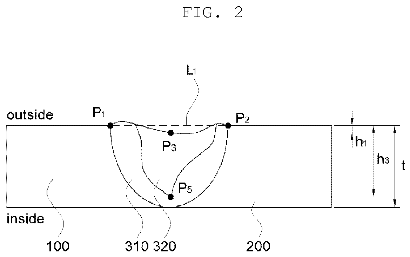

FIG. 2 is another cross-sectional view illustrating a welded cross-section in a battery module according to an embodiment of the present disclosure. In detail, FIG. 2 corresponds to a case where the surface of the repair area 320 is located inside a straight line $L_1$ connecting a first boundary $P_1$ with a second boundary $P_2$. The first boundary $P_1$ is the boundary of an outer surface of the first base material 100 and the defect area 310 of the welded joint 300. The second boundary $P_2$ is the boundary of an outer surface of the second base material 200 and of the defect area 310 of the welded joint 300. Referring to the embodiment of FIG. 2, when the surface of the repair area 320 is located inside the straight line $L_1$, the repair area 320 satisfies the following Expression 1.

$$[\text{Expression 1}]$$

$$0 \leq h_1 \leq 0.15t$$

As illustrated in FIG. 2, $h_1$ is the shortest distance (mm) between the straight line $L_1$ and a lowest point $P_3$ on the surface of the repair area 320 located inside the straight line L1 on the welded cross-section, and t is the thinner thickness (mm) between the first base material 100 and the second base material 200. In addition, the defect area 310 may be the area formed by the surface defects such as the holes or craters satisfying Expression 3 below.

[Expression 3]

$$h_3 > 0.15t$$

As illustrated in FIG. 2, $h_3$ is the shortest distance (mm) between the straight line $L_1$ and a lowest point $P_5$ on the surface of the defect area 310 located inside the straight line $L_1$ on the welded cross-section.

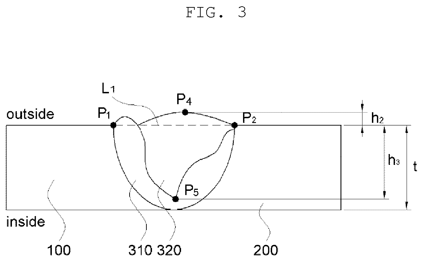

FIG. 3 is another cross-sectional view illustrating a welded cross-section in a battery module according to an embodiment of the present disclosure. In detail, the embodiment illustrated in FIG. 3 corresponds to a case where the surface of the repair area 320 is located outside a straight line $L_1$ connecting an outer surface of the first base material 100 and a boundary $P_1$ of the defect area 310 of the welded joint 300 and an outer surface of the second base material 200 and a boundary $P_2$ of the repair area 320 of the welded joint 300. When the surface of the repair area 320 is located outside the straight line $L_1$, the repair area 320 satisfies the following Expression 2.

[Expression 2]

$$0 \le h_2 \le 0.2 \text{ mm} + 0.3t$$

As illustrated in FIG. 3, $h_2$ is the shortest distance (mm) between the straight line $L_1$ and a highest point $P_4$ on the surface of the repair area 320 located outside the straight line L1 on the welded cross-section; and t is the same as described above. In addition, the defect area 310 may be the area formed by the surface defect satisfying the Expression 3.

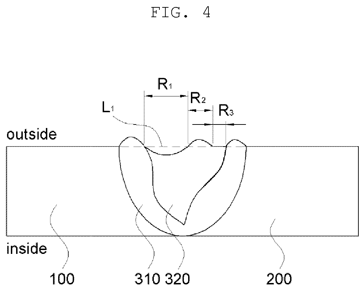

FIG. 4 is another cross-sectional view illustrating a welded cross-section in a battery module according to an embodiment of the present disclosure. Referring to FIG. 4, the surface of the repair area 320 includes, but is not limited to, a first area $R_1$ located inside the straight line $L_1$ as defined above, a second area $R_2$ located outside the straight line $L_1$, and a third area $R_3$ located on the straight line $L_1$, and the surface of the repair area according to an embodiment may include one or more areas selected from the first area, the second area, and the third area. As illustrated in FIG. 4, when the surface of the repair area 320 includes the first, second, and third areas $R_1$, $R_2$, and $R_3$, the first area $R_1$ of the surface of the repair area 320 satisfies Expression 1, the second area $R_2$ satisfies Expression 2, and the third area $R_3$ may satisfy both Expressions 1 and 2 since both $h_1$ and $h_2$ in Expressions 1 and 2 are 0.

The embodiments of FIGS. 1 to 4 illustrate that the outer surface of the first base material 100 and the outer surface of the second base material 200 in contact with the welded joint 300 are located on the same plane, but the present disclosure is not limited thereto.

The specific shape of the first base material and the second base material may be a shape that may be implemented in whole or in part by assembling the housing member(s) of the first base material and the second base material according to the designed shape of the intended housing. For example, the first and second base materials may each be in a rectangular plate or a bent rectangular plate shape in which one end portion or both end portions are vertically bent, and the designed housing shape may be implemented by assembling one or more square plates and/or one or more bent square plates.

As a practical example, the housing may have a rectangular parallelepiped shape, and by setting one axis direction to front/back, the other axis direction to left/right, and the remaining other axis direction to upper/lower in three axes orthogonal to each other, the two square plates with both bent end portions are assembled so that the end portions are joined to each other, and thus, the upper/lower and left/right blocked spaces are partitioned. Each of the two square plates may be assembled to close the opening of the assembled two bent square plates, and thus, the sealed internal accommodation space of which the front/back is closed may be formed.

As another practical example, the housing may have a rectangular parallelepiped shape, and by setting one axis direction to front/back, the other axis direction to left/right, and the remaining other axis direction to upper/lower in three axes orthogonal to each other, one square plate with both bent end portions is assembled so that the square plate is vertically joined to both end portions not bent, and thus, the front/back and left/right blocked spaces are partitioned, and the one square plate may be assembled to close the upper or lower opening of the opened square plate, and thus, the sealed internal accommodation space may be formed.

In this case, the assembly of the housing members (square plate, bent square plate) may involve binding the housing members together by welding. When there is more than one welded site (welding line) in the housing, at least one welded site may have the shape of the above-described welded joint, and furthermore, all welded sites formed with the defect area may have the above-described shape of the welded joint. That is, the housing may further include a normal welded joint in which the defect area is not formed, and the normal welded joint refers to a portion in which the surface defects such as the holes or craters do not occur after the first base material and the second base material are melted and joined. The normal welded joint may satisfy the following Expression 1-1 or 2-1.

[Expression 1-1]

$$0 \leq h_{1-1} \leq 0.15t$$

[Expression 2-1]

$$0 \leq h_{2-1} \leq 0.2 \text{ mm} + 0.3t$$

In the above Expressions 1-1 and 2-1, $h_{1-1}$ denotes a shortest distance (mm) between the straight line connecting the outer surface of the first base material and the boundary of the normal welded joint and the outer surface of the second base material and the boundary of the normal welded joint in the welded cross-section and the lowest point on the surface of the normal welded joint located inside the straight line on the welded cross-section, $h_{2-1}$ denotes a shortest distance (mm) between the straight line and a highest point on the surface of the normal welded joint located outside the straight line on the welded cross-section, and t denotes a thinner thickness (mm) of thicknesses of the first base material and the second base material.

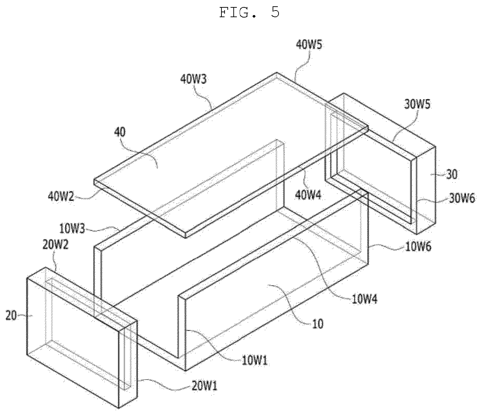

FIG. 5 is an exploded perspective view of housing members that are joined by welding to form a housing in the battery module according to an embodiment of the present disclosure. Practically, as illustrated in FIG. 5, the housing may include a first housing member 10 in a bent square plate shape that forms a bottom surface and two left and right side surfaces integrally connected to the bottom surface; (at least) a second housing member 40 in a square plate shape that is joined to the first housing member to form an upper surface facing the bottom surface; and a third housing member 20 and a fourth housing member 30 in the square plate shape that are joined to the first housing member 10 and the second housing member 40 to form two side surfaces on the front and back of the housing. The first base material connected to each other by the welded joint may be one selected from the first to fourth housing members, and the second base material may be the other that is different from the first base material and selected from the first to fourth housing members.

A pair of the first base material-second base material connected to each other by the-described welded joint may be at least one selected from the following i) to v).

    i) First housing member 10-second housing member 40
    ii) First housing member 10-third housing member 20
    iii) First housing member 10-fourth housing member 30
    iv) First housing member 10-second housing member 40 to which the third housing member 20 and the fourth housing member 30 are welded.
    v) First housing member 10-fourth housing member 30 to which the second housing member 40 and the third housing member 20 are welded.

In this case, the welded site of the first housing member welded to the third and fourth housing members and/or the welded site of the first housing member welded to the second and third housing members may have the shape of the welded joint described above, but the shape welded by the conventional welding method is not excluded.

As a practical example, one of the first base material and the second base material may be a housing member manufactured from an aluminum-based alloy containing silicon at 8 wt% or more, and more practically, one of the first base material and the second base material may be the third housing member or the fourth housing member. That is, the pair of the first base material-second base material connected to each other by the above-described welded joint may be at least one selected from the pairs ii) to v).

Describing in detail as a pair of the welding end portions that are welded to each other between each housing member with reference to the exploded perspective view of FIG. 5, the welded site of the first base material and the second base material may be selected at one or more of a U-shaped end portion 10W1 of the first housing member 10 and lower and both end portions 20W1 of the third housing member 20; an upper end portion 20W2 of the third housing member 20 and one end portion 40W2 of the second housing member 40; an end portion 40W3 of the second housing member 40 and a bent end portion 10W3 of the first housing member 10; the other end portion 40W4 of the second housing member 40 and the other bent end portion 10W4 of the first housing member 10; the other U-shaped end portion 10W6 of the first housing member 10 and the lower and both end portions 30W6 of the fourth housing member 30; and the other end portion 40W5 of the second housing member 40 and the upper end portion 30W5 of the fourth housing member 30.

In this case, before the inner accommodation space is sealed by the welding joining between the first to fourth housing members, that is, after the battery cell is inserted into the inner space formed by the housing member in a state in which the top or front/back side is opened, the one opened side may be closed. That is, before joining the second housing member 40, the third housing member 20 or the fourth housing member 30 as the upper plate, after the plurality of battery cells are inserted into the inner accommodation space, the housing member sealing the one opened side may be welded and joined together.

The thickness of the housing member in the form of the square plate or the bent square plate is in the order of $10^0$mm to $10^1$mm. As a practical example, the thickness of the housing member may be at the level of 1 mm to 30 mm, but is not necessarily limited thereto.

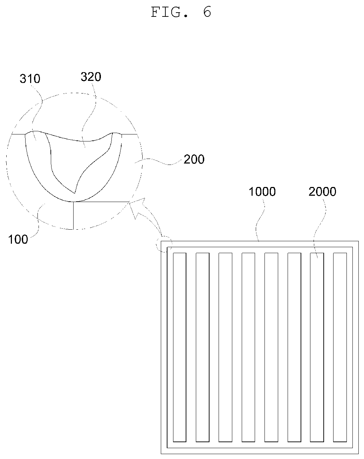

FIG. 6 is a cross-sectional view illustrating a cross-section of a battery module including a housing 1000 having an internal accommodating space formed by weld joining of housing members and a plurality of battery cells 2000 accommodated in an internal accommodating space of the housing 1000. The area indicated by the dotted circle in FIG. 6 may correspond to the welded portion (welded joint) between the U-shaped end portion 10W1 of the first housing member 10 and the lower and both side end portions 20W1 of the third housing member 20 based on FIG. 5, and an enlarged view illustrating the area indicated by the dotted circle on the right is illustrated. The first housing member 10 is used as the first base material 100 and the third housing member 20 is used as the second base material 200. The first base material 100 and the second base material 200 are melted and joined by laser irradiation, and then the defective area is repair-welded with the filler of the third alloy, so the housing 1000 may have the welded joint 300 including the defect area 310 and the repair area 320 that satisfy a specific shape.

In one specific example, the welded joint 300 may be a butt joint, a corner joint, a flange-type butt joint (edge joint), or a tee joint (T joint), depending on the shape of the first base material and the second base material, the assembly structure between the housing members, the design shape of the housing, etc., but the welded joint 300 is not necessarily limited thereto.

An embodiment of the present disclosure includes a method for manufacturing the above-described battery module.

A method for manufacturing a battery module according to the present disclosure includes a) aligning the first base material and the second base material in the first base material and the second base material, which are the welding targets and the housing members that are joined to each other to form the internal accumulating space in which the multiple battery cells are accommodated; and b) irradiating a laser to a contact surface between the first base material and the second base material to form a welded joint that includes a defect area and a repair area that covers the defect area, satisfies the following Expression 1 or 2 and has a lower silicon concentration than a defect area.

[Expression 1]

$$0 \leq h_1 \leq 0.15t$$

[Expression 2]

$$0 \leq h_2 \leq 0.2 \text{ mm} + 0.3t$$

In the above Expressions 1 and 2, $h_1$ denotes a shortest distance (mm) between a straight line connecting an outer surface of the first base material and a boundary of the welded joint and an outer surface of the second base material and the boundary of the welded joint in a welded cross-section and a lowest point on a surface of the repair area located inside the straight line on the welded cross-section, $h_2$ denotes a shortest distance (mm) between the straight line and a highest point on the surface of the repair area located outside the straight line on the welded cross-section, and t denotes a thinner thickness (mm) of thicknesses of the first base material and the second base material.

In this case, the defect area is the area where the weld bead is empty due to the surface defects such as the holes or craters and a peripheral portion thereof, and may be formed by irradiating the laser to the contact surface between the first base material and the second base material.

In operation a), the alignment between the first base material and the second base material may be an alignment for the butt joint, an alignment for the corner joint, the alignment for the flange-type butt joint, or an alignment for the tee joint, and may be an alignment in which the entirety or a part of the housing shape designed by the alignment of the housing member(s) of the first base material and the second base material may be implemented. In addition, in the case where the sealed housing is completed by the formation of the welded joint in operation b), the inserting of the plurality of battery cells into the space corresponding to the internal accommodating space before welded may be further performed before operation a) or after operation a) and before operation b).

The welded joint formed in operation b) is similar to or identical to the welded joint described above in the battery module. Accordingly, the method for manufacturing a battery module includes all contents described above in the battery module.

In the method for manufacturing a battery module according to an embodiment, the surface defects such as the holes or craters may be not only healed by the repair area that satisfies Expression 1 or 2 and has a lower silicon concentration than the defect area, but the occurrence and propagation of microscopic cracks may also be effectively suppressed. Accordingly, the problems of physical damage or reduced safety due to internal pressure and external force applied to the battery module may be solved.

The silicon concentration of the repair area may be 2 wt% or less, 1.5 wt% or less, 0 wt% or more, 0.01 wt% or more, 0.1 wt% or more, or a value between these values, such as 0 to 2 wt%, 0.01 to 2 wt%, or 0.1 to 1.5 wt%.

As described above, in the battery module, the difference in the silicon concentration between the repair area and the defect area may be 15 wt% or less, 8 wt% or less, 6 wt% or less, 3 wt% or more, 4 wt% or more, or a value between the values such as 3 to 15 wt%, 3 to 8 wt%, or 4 to 6 wt%.

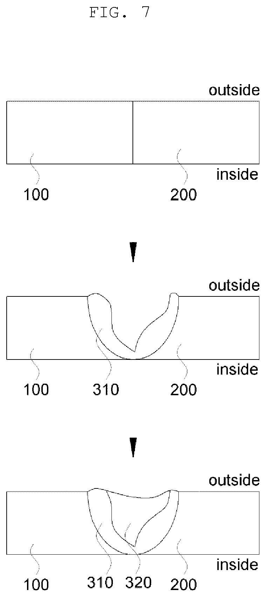

FIG. 7 is a diagram illustrating a process diagram of the method for manufacturing a battery module according to an embodiment of the present disclosure. Referring to FIG. 7, the method may include aligning the first base material 100 and the second base material 200; and, as operation b), b1) irradiating a welding laser to the contact surface between the first base material 100 and the second base material 200 to form the welded joint (or deflective welded joint) that includes a defect area 310; and b2) measuring the area or volume of the defect area 310, and irradiating a repair welding laser while supplying the filler of the third alloy onto the defect area 310 to form the welded joint 300 that includes the repair area 320 that covers the defect area 310, satisfies Expression 1 or 2, and has the lower silicon concentration than the defect area. As illustrated in FIG. 7, the welded joint 300 including the defect area 310 may be formed simultaneously with melting and joining two base materials 100 and 200, or during storage or operation of the battery module after the melting and joining. When the housing of the battery module includes even a portion of the defect area, the defect area itself and cracks formed by propagation therefrom may cause stability degradation such as foreign substance penetration, explosion, and performance degradation such as reduced battery life. By performing the repair welding while supplying the filler of the third alloy to the defect area 310, the repair area 320 may be formed. Such a repair area 320 satisfies Expression 1 or 2 and has a lower silicon concentration than the defect area 310, so that surface defects such as the holes or craters may be healed, and the occurrence and propagation of fine cracks may be effectively suppressed. Accordingly, an embodiment of the present disclosure provides a battery module to solve the problems of the physical damage or reduced safety due to the internal pressure and external force applied to the battery module.

In one specific example, the operation b1) may include welding by irradiating the welding laser to the contact surface between the first base material and the second base material; measuring the width, height, etc., of the welded portion through a vision inspector; and selecting the welded joint (or deflective welded joint) having the defect area based on the measured values. For example, based on the welded section, a shortest distance $h_{3-1}$ (mm) between the straight line connecting the outer surface of the first base material and the boundary of the welded portion and the outer surface of the second base material and the boundary of the welded portion and the lowest point on the surface of the welded portion located inside the straight line on the welded section; and the thinner thickness t (mm) of the thicknesses of the first base material and the second base material are measured, and when $h_{3-1}$ and "t" satisfy the following Expression 3-1, it is determined to be the deflective welded joint, and the repair welding may be performed in the operation b2) described below.

$$[\text{Expression 3-1}]$$

$$h_{3-1} > 0.15t$$

Since the repair area is formed on the defect area of operation b2) by irradiating the laser for repair welding while supplying the filler of the third alloy on the defect area of operation b1), the shapes of the defect area of operation b1) and the defect area of operation b2) may not completely match.

In operation b2), the filler of the third alloy may be supplied while irradiating the laser for repair welding so that the repair area formed on the defect area satisfies the Expression 1 or 2 and has lower silicon concentration than the defect area. In this case, the filler may be supplied onto the defect area while the third alloy is melted by the laser for repair welding. The laser for repair welding may be irradiated so that not only the filler of the third alloy but also the defect area may be melted, and since the molten third alloy is supplied onto the molten defect area, the adhesion between the defect area and the repair area may be further improved, so the occurrence and propagation of cracks may be more effectively suppressed. In addition, the thickness and length of the supplied filler may be determined by the amount of the third alloy required, and the amount of the third alloy required may be determined by the width, height, etc., of the deflective welded joint so that the repair area finally formed satisfies the above Expression 1 or 2.

In one specific example, the welding laser irradiated in operation b1) and the repair welding laser irradiated in operation b2) may each be a near-infrared laser.

When the first alloy of the first base material, the second alloy of the second base material, and the third alloy supplied during the repair welding each are an aluminum-based alloy, the third alloy may have a higher aluminum content than the first alloy and the second alloy. Accordingly, the third alloy may have lower silicon content than the first and second alloys, so that the silicon concentration in the repair area may be lower than the silicon concentration in the defect area. For example, the third alloy may have an aluminum content of 95 to 100 wt%, 95 to 99.9 wt%, 98 to 99.9 wt%, or 99 to 99.9 wt%, and may have a silicon content of 0 to 1 wt%, 0.01 to 1 wt%, 0.01 to 0.5 wt%, or 0.01 to 0.3 wt%, and may include other metals forming the alloys as the remainder. An example of the practical third alloy may include the Al1000 series aluminum alloy, however, it may be replaced with another component without departing from the scope of the present disclosure.

The melting point of the third alloy may be higher than the lower melting point of the melting points of the first alloy and the second alloy. Specifically, the melting point of the third alloy may be higher than the lower melting point of the first alloy and the second alloy and lower than the higher melting point of the first alloy and the second alloy. When the melting point of the third alloy satisfies the above-described range, the concentration of impurities that cause the occurrence and propagation of cracks may be reduced, thereby more effectively preventing the occurrence and propagation of cracks. When the third alloy is the aluminum-based alloy, it may have a melting point of 600 to 750°C, 620 to 720°C, or 650 to 700°C.

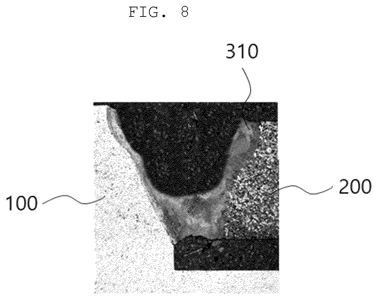

FIG. 8 is a diagram illustrating a welded defect portion in a battery module according to an embodiment of the present disclosure. It may be confirmed that the defect area 310 is formed by melting and joining the first base material 100 and the second base material 200.

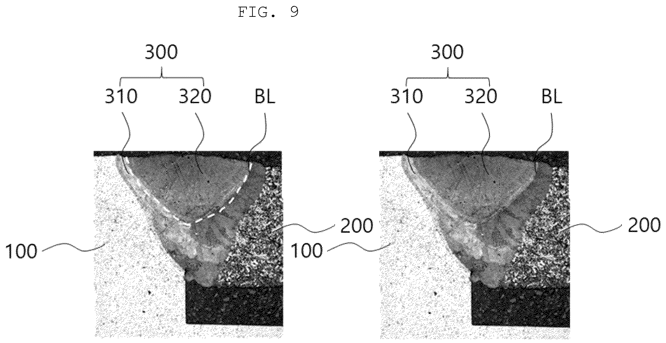

FIG. 9 is a diagram illustrating a repair weld portion in the battery module according to an embodiment of the present disclosure. It may be confirmed that the repair area 320 is formed to cover the entire defect area 310 formed by melting and joining the first base material 100 and the second base material 200. In addition, a boundary line BL between the areas may be confirmed by the difference in silicon concentration between the defect area 310 and the repair area 320.

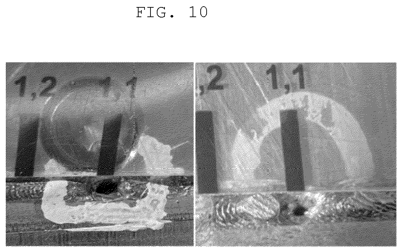

Fig. 10 is a diagram illustrating an appearance of a welding defect in the battery module according to an embodiment of the present disclosure. It may be confirmed that the defects such as the holes or craters due to the welding are formed on the appearance of the battery module.

Hereinafter, embodiments of the present disclosure will be further described with reference to specific Experimental Examples. Examples and Comparative Examples included in Experimental Examples are merely illustrative of the present invention and do not limit the scope of the appended claims. It will be apparent to those skilled in the art that various changes and modifications to the embodiments are possible within the scope and technical field of the present disclosure. Such changes and modifications shall fall within the scope of the appended claims. Furthermore, the embodiments may be combined to form additional embodiments.

### Example 1

A battery module including a welded joint having a defect area with 6 wt% of silicon concentration and $h_3 = 0.45t$ and a repair area with 0.2 wt% of silicon concentration and $h_1 = 0.08t$ was prepared. Specifically, Al 6063 (melting point: 585°C) and ALDC 12 (melting point: 770°C, Si content: 9.6 to 12.0 wt%) were used as the housing members (first base material and second base material) to be welded, and Al 1050 (melting point: 660°C, Si content: 0.25 wt%, Al content > 99.5 wt%) was used as a filler for repair welding. After butt-joining the two housing members, the housing members were welded by being irradiated with a near-infrared (NIR) laser at an intensity of 20 J/mm. Next, the repair welding was performed by searching for a location of a defective welded joint with $h_{3-1} = 0.45t$ using a vision inspector, accurately measuring a width and height of a portion requiring repair welding using a 3D shape measuring instrument equipped on repair welding equipment, and then irradiating a near-infrared laser at an intensity of 20 J/mm while supplying an appropriate amount of filler. The silicon concentration was derived by a scanning electron microscope (SEM)-energy dispersive X-ray spectroscopy (EDS) (SEM-EDS) analysis device.

### Example 2

Except that Al 3004 (melting point: 633 °C, Si content: 0.3 wt%, Al content: 97.8 wt%) was used instead of Al 1050 as a filler for repair welding, a battery module including a welded joint having a defect area with 6 wt% of silicon concentration and $h_3 = 0.45t$ and a repair area with 0.27 wt% of silicon concentration and $h_2 = 0.2\,mm + 0.1t$ was prepared in the same manner as Example 1.

### Example 3

Except that Al 4043 (melting point: 573.9 to 632°C, Si content: 4.5 to 6.0 wt%, Al content: 92.3 to 95.5 wt%) was used instead of Al 1050 as a filler for repair welding, a battery module including a welded joint having a defect area with 6 wt% of silicon concentration and $h_3 = 0.45t$ and a repair area with 1.2 wt% of silicon concentration and $h_1 = 0.09t$ was prepared.

### Comparative Example 1

Except that repair welding was not performed in Example 1, a battery module including a welded joint having only a defect area with 6 wt% of silicon concentration and $h_3 = 0.45t$ was prepared in the same manner as in Example 1.

**Comparative Example 2**

By irradiating the defect area of Comparative Example 1 with a laser at an intensity of 20 J/mm without supplying a filler, i.e., re-melting the defect area, a battery module including a welded joint having only a defect area with 6 wt% of silicon concentration and $h_3 = 0.4t$ was prepared.

**Comparative Example 3**

Except that repair welding was performed by irradiating a near-infrared laser while supplying a smaller volume of filler than in Example 1, a battery module including a welded joint having a defect area with 6 wt% of silicon concentration and $h_3 = 0.45t$ and a repair area with 0.21 wt% of silicon concentration and $h_1 = 0.17t$ was prepared in the same manner as in Example 1.

**Comparative Example 4**

Except that repair welding was performed by irradiating a near-infrared laser while supplying a larger volume of filler than in Example 1, a battery module including a welded joint having a defect area with 6 wt% of silicon concentration and $h_3 = 0.45t$ and a repair area with 0.2 wt% of silicon concentration and $h_2 = 0.2 \text{ mm} + 0.5t$ was prepared in the same manner as in Example 1.

**Evaluation Example**

A welded cross-section cut to minimize an area of a welded joint where repair welding was performed was etched in a 5 wt% of sodium hydroxide aqueous solution for 2 minutes to prepare a welded cross-section specimen divided into a defect area and a repair area by light and dark. The silicon concentration in each of the defect area and the repair area of the welded cross-section specimen was quantified and analyzed by scanning electron microscope (SEM)-energy dispersive X-ray spectroscopy (EDS) (SEM-EDS). The welded cross-section specimen prepared in the above manner was calculated by a ratio of a thickness of a second base material which is the thinner thickness t among the first base material and the second base material by measuring $h_1$ and $h_3$ defined in this specification by image analysis using an optical microscope (OM).

Mechanical properties were evaluated by testing the tensile strength of the welded joint at 20 mm/min using a universal test machine. Specifically, a fracture portion observation experiment was conducted through an initial state before the battery module was operated and an internal pressure simulation evaluation using a hydraulic cylinder. The criterion for securing weld integrity is base material fracture (members 1 and 2), and weld bead fracture is determined as poor quality.

The evaluation results are shown in Table 1 below.

[Table 1]

| | | Example 1 | Example 2 | Example 3 | Comparative Example 1 | Comparative Example 2 | Comparative Example 3 | Comparative Example 4 |
|---|---|---|---|---|---|---|---|---|
| Defect area | Si concentration (wt%) | 6 | 6 | 6 | 6 | 6 | 6 | 6 |
| | $h_3$ | 0.45t | 0.45t | 0.45t | 0.45t | 0.4t | 0.45t | 0.45t |
| Repair area | Si concentration (wt%) | 0.2 | 0.27 | 1.2 | - | - | 0.21 | 0.2 |
| | $h_1$ or $h_2$ | $h_1 = 0.08t$ | $h2 = 0.2mm+0.1t$ | $h_1 = 0.09t$ | - | - | $h_1 = 0.17t$ | $h_2 = 0.2mm+0.5t$ |
| Tensile strength (arbitrary) | UTM | 1 | 1.05 | 1.3 | 0.82 | 0.91 | 0.98 | 1.1 |
| Fracture mode | | Base material fracture | Base material fractur e | Base material fracture | Base materi al fractur e | Bead fracture | Bead fracture | Bead fracture | Bead fracture |

Referring to Table 1 above, Examples 1 to 3 showed excellent initial tensile strength and a significantly high retention rate of tensile strength due to the long-term operation of the battery module since the repair area had a lower silicon concentration than the defect area and satisfied Expression 1 or 2.

On the other hand, Comparative Example 1 did not perform the repair welding on the defective portion, and thus did not have the repair area. As a result, it was confirmed that the initial tensile strength and the retention rate of the tensile strength retention rate due to the long-term operation of the battery module were low.

In addition, Comparative Example 2 performed the repair by re-melting the defective portion, and did not have the repair area. As a result, it was confirmed that the initial tensile strength and the retention rate of the tensile strength due to the long-term operation of the battery module were low.

In addition, Comparative examples 3 and 4 showed that the silicone concentration in the repair area is lower than that in the defect area but did not satisfy Expressions 1 and 2. As a result, it was confirmed that the initial tensile strength and the retention rate of the tensile strength due to the long-term operation of the battery module were low.

According to the battery module of the present disclosure, it is possible to suppress the crack generation and propagation at the welded joints by including the welded joints with high welding quality. Accordingly, it is possible to improve the long-term reliability and safety of the battery.

The above-described contents are merely examples of applying the principles of the present disclosure, and other configurations may be further included without departing from the scope of the present disclosure.

**Claims**

1. A battery module comprising:

   a housing that has an internal accommodating space; and
   a plurality of battery cells that are located in the internal accommodating space,
   wherein the housing includes a welded joint in which a first base material of a first alloy and a second base material of a second alloy are welded,
   wherein the welded joint includes a defect area in which the first base material and the second base material are welded and joined and a repair area located on the defect area,
   wherein the repair area has a lower silicon concentration than the defect area, and
   wherein the repair area satisfies the following Expression 1 or 2:

$$[\text{Expression 1}]$$

$$0 \leq h_1 \leq 0.15t$$

$$[\text{Expression 2}]$$

$$0 \leq h_2 \leq 0.2 \text{ mm} + 0.3t$$

   wherein in the above Expressions 1 and 2, $h_1$ denotes a shortest distance (mm) between a straight line connecting a first and second boundary and a lowest point on a surface of the repair area located inside the straight line on the welded cross-section,
   wherein the first boundary is the boundary of the welded joint with the outside surface of the first base material, and the second boundary is the boundary of the welded joint with the outside surface of the second base material, $h_2$ denotes a shortest distance (mm) between the straight line and a highest point on the surface of the repair area located outside the straight line on the welded cross-section, and t denotes a thinner thickness (mm) of thicknesses of the first base material and the second base material.

2. The battery module of claim 1, wherein the silicon concentration of the repair area is 2 wt% or less, and optionally, the difference in the silicon concentration between the repair area and the defect area is 3 to 15 wt%.

3. The battery module of any of claim 1 or 2, wherein the defect area satisfies the following Expression 3:

$$[\text{Expression 3}]$$

$$h_3 > 0.15t$$

In the above Expression 3, $h_3$ denotes a shortest distance (mm) between the straight line connecting the outer surface of the first base material and the boundary of the welded joint and the outer surface of the second base material and the boundary of the welded joint in the welded cross-section and the lowest point on the surface of the defect area located inside the straight line in the welded cross-section, and t denotes the thinner thickness (mm) of thicknesses of the first base material and the second base material.

4. The battery module of any of claims 1 to 3, wherein the repair area is repair-welded using a filler of a third alloy.

5. The battery module of any of claims 1 to 4, wherein a melting point of the third alloy is higher than a lower melting point of melting points of the first alloy and the second alloy.

6. The battery module of any of claims 1 to 5, wherein the first alloy to the third alloy are each an aluminum-based alloy.

7. The battery module of any of claims 1 to 6, wherein at least one of the first alloy and the second alloy is an aluminum-based alloy containing 8 wt% or more of silicon.

8. The battery module of any of claims 1 to 7, wherein the third alloy has a higher aluminum content than the first alloy and the second alloy.

9. The battery module of any of claims 1 to 8, wherein the first base material and the second base material are each in the shape of a square plate or a bent square plate having one end portion or both end portions vertically bent.

10. The battery module of any of claims 1 to 9, wherein the housing includes: a first housing member in a bent square plate shape that forms a bottom surface and two side surfaces on left and right integrally connected to the bottom surface; a second housing member in a square plate shape that is joined to the first housing member to form an upper surface facing the bottom surface; and a third housing member and a fourth housing member in the square plate shape that are joined to the first housing member and the second housing member to form two side surfaces on front and back.

11. The battery module of any of claims 1 to 10, wherein the first base material connected to each other by the welded joint is one selected from the first to fourth housing members, and the second base material is another one selected from the first to fourth housing members that is different from the first base material..

12. A method for manufacturing a battery module, the method comprising:

a) aligning a first base material and a second base material, which are welding targets and housing members that are joined to each other to form an internal accumulating space in which multiple battery cells are accommodated; and
b) irradiating a laser to a contact surface between the first base material and the second base material to form a welded joint that includes a defect area and a repair area that covers the defect area, satisfies the following Expression 1 or 2 and has a lower silicon concentration than a defect area.

[Expression 1]

$$0 \le h_1 \le 0.15t$$

[Expression 2]

$$0 \le h_2 \le 0.2 \text{ mm} + 0.3t$$

In the above Expressions 1 and 2, $h_1$ denotes a shortest distance (mm) between a straight line connecting an outer surface of the first base material and a boundary of the welded joint and an outer surface of the second base material and the boundary of the welded joint in a welded cross-section and a lowest point on a surface of the repair area located inside the straight line on the welded cross-section, $h_2$ denotes a shortest distance (mm) between the straight line and a highest point on the surface of the repair area located outside the straight line on the welded cross-section, and t denotes a thinner thickness (mm) of thicknesses of the first base material and the second base material.

13. The method of claim 12, wherein in operation a), the alignment between the first base material and the second base material is an alignment for a butt joint, an alignment for a corner joint, an alignment for a flange-type butt joint, or an alignment for a tee joint.

14. The method of any of claims 12 or 13, further comprising inserting a plurality of battery cells into a space corresponding to an internal accommodating space before welding, before operation a), or after operation a) and before operation b).

15. The method of any of claims 12 to 14, wherein the silicon concentration of the repair area is 2 wt% or less, and optionally, the difference in the silicon concentration between the repair area and the defect area is 3 to 15 wt%.

FIG. 1

FIG. 2

FIG. 3

FIG. 4

outside

inside

100    310 320    200

FIG. 5

FIG. 6

FIG. 7

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/143801 A1 (CHEONG HOEMIN [KR] ET AL) 11 May 2023 (2023-05-11)<br>* figure 4 *<br>* figures 5A-B *<br>* figure 1 *<br>* figure 2 *<br>* figures 3A-B *<br>* paragraph [0069] - paragraph [0072] *<br>* claim 1 * | 1-15 | INV.<br>B23K26/00<br>C22C21/02<br>H01M50/209<br>H01M50/211<br>H01M50/224<br>B23K26/24<br>H01M50/233<br>H01M50/244 |
| A | CN 103 733 377 A (KOBE STEEL LTD) 16 April 2014 (2014-04-16)<br>* paragraph [0053] *<br>* abstract * | 1-15 | |
| A | JP 2014 102895 A (TOYOTA IND CORP) 5 June 2014 (2014-06-05)<br>* figures 1-6 *<br>* abstract * | 1-15 | |

TECHNICAL FIELDS
SEARCHED (IPC)

B23K
C22C
H01M

The present search report has been drawn up for all claims

| Place of search | Date of completion of the search | Examiner |
|---|---|---|
| The Hague | 9 September 2025 | Godino Martinez, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 1792

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2025

| Patent document cited in search report | | Publication date | Patent family member(s) | | Publication date |
|---|---|---|---|---|---|
| US 2023143801 | A1 | 11-05-2023 | CN | 116252049 A | 13-06-2023 |
| | | | EP | 4180168 A1 | 17-05-2023 |
| | | | KR | 20230067233 A | 16-05-2023 |
| | | | US | 2023143801 A1 | 11-05-2023 |
| CN 103733377 | A | 16-04-2014 | CN | 103733377 A | 16-04-2014 |
| | | | JP | 5656802 B2 | 21-01-2015 |
| | | | JP | 2013097900 A | 20-05-2013 |
| | | | KR | 20140077940 A | 24-06-2014 |
| | | | WO | 2013061707 A1 | 02-05-2013 |
| JP 2014102895 | A | 05-06-2014 | JP | 6015373 B2 | 26-10-2016 |
| | | | JP | 2014102895 A | 05-06-2014 |

EPO FORM P0459

For more details about this annex : see Official Journal of the European Patent Office, No. 12/82